# EUROPEAN PATENT SPECIFICATION

(11) **EP 2 248 757 B1**
(45) Date of publication and mention of the grant of the patent: **31.10.2012**
(21) Application number: 10174065.2
(22) Date of filing: 08.09.1997
(51) Int. Cl.: B66F 9/06, E04G 1/18, B66F 11/04

(54) **Personnel carrying vehicle**
Fahrzeug zum Personentransport
Véhicule de transport de personnel

(43) Date of publication of application: 10.11.2010
(62) Divisional of application: 05077653.3
(73) Proprietor: CROWN EQUIPMENT CORPORATION, New Bremen, Ohio 45869 (US)
(72) Inventor: Stammen, Harold A., New Bremen, OH 45869 (US); Grisez, Ronald A., Versailles, Ohio 45380 (US); Ranly, Matthew P., Minster, OH 45865 (US); Sherman, Daniel L., Minster, OH 45865 (US); Burns, Bradley A., Wapakoneta, OH 45895 (US); Linn, Thomas W., St. Henry, OH 45883 (US); Heidemann, William J., Sidney, OH 45365 (US); Dammeyer, Ned E., New Bremen, OH 45869 (US); Knapschaefer, Joseph H., Coldwater, OH 45828 (US); Gilliland, Kevin A., Coldwater, OH 45828 (US); Stauffer, Robert J., New Bremen, OH 45869 (US); Smith, David B., Worthington, OH 43085 (US); McClusky, John F., Eugene, Oregon 97402 (US); Norland, Leif A., Park, MI 49424 (US); Kruithof jr., Pieter C., Redmond, WA 98052 (US); Leasor, Paul J., St. Marys, OH 45885 (US); Haverfield, Forrest A., Maplewood, Ohio 45340 (US); Quellhorst, Timothy S., New Bremen, Ohio 45869 (US); Luebrecht, Donald E., Ft. Jennings, Ohio 45844 (US); Gallagher, Michael P., Greenville, Ohio 45331 (US); Bidwell, Thomas C., Kettering, Ohio 45429 (US)
(74) Representative: Moore, Michael Richard

(56) References cited:
- EP-A- 0 557 685
- DE-A1- 2 139 798
- FR-A- 1 090 836
- JP-A- 8 011 621
- US-A- 3 224 528
- US-A- 3 709 322

## Description

### Background of the Invention

This invention relates to a electric powered personnel carrying vehicle that is particularly useful in transporting small items retrieved from shelves in a warehouse, or as a work platform which allows an operator to be raised approximately six feet or more into the air.

Small parts packing is currently done by personnel manually pushing carts equipped with several shelves and a low level ladder which the operator climbs for reaching stock items up to nine feet high. Higher elevation picking up to 12 feet is accomplished with large manual push-in-place mobile ladder stands. Each require the operator to climb up and down while manually holding the goods.

Self-propelled elevating work platforms presently offered to the user are typically large in size, move slowly, have poor travel and controls and are not ergonomically well designed for tasks other than elevating personnel to do elevated maintenance and construction work.

Industrial order picker lift trucks are designed to elevate an operator on a control platform and goods on a pallet carried by the forks of the vehicle. A load platform in place of forks is also available. All units are designed for carrying heavier loads typical to pallet unit size. This requires these vehicles to be large in size and incapable of use in typical small parts storage areas.

A vehicle according to the preamble of claim 1 is known from US 3 224 528.

### Summary of the Invention

The present invention is a multi-task capable work assist vehicle designed for transporting and elevating an operator with goods or equipment. Its uses include orderpicking, in-house service maintenance and cargo delivery. It is designed to be compact in size, highly maneuverable for use in narrow storage aisles and tight quarters. Operator controls are designed for efficient use. Guarding and control interlocks may be provided to assist operator safety.

Thus, the invention provides a personnel carrying vehicle for transporting and elevating an operator, comprising: a self propelled, steerable body having a front and a rear; a mast attached towards the rear of the body and extending upwardly and forwardly of the body from the place of attachment; a personnel compartment attached to the mast; a load deck mounted over the front of the body on the opposite side of the mast to the personnel compartment for supporting articles to be carried by the vehicle; and wherein control handles are mounted within the personnel compartment for controlling steering and traction of the vehicle.

In some embodiments, the mast extends upwardly and forwardly of the body at an angle of approximately five degrees to the top of the rail; this provides the operator with unobstructed access to anything above the top edge of the rail, and the forward tilt of the mast enlarges the upper portion of the compartment, near the waist of the operator, thus accommodating the operator comfortably without increasing the length of the vehicle; it also causes the center of gravity of the vehicle to move forward, toward the center of the vehicle, as the compartment is raised. The vehicle may be driven by electric motors which are located under the operator compartment and attached to the drive wheels through a gear train to permit the floor of the compartment to be positioned as close to the ground level as possible. In the preferred embodiment, the left control handle controls steering and the right control handle controls traction. Sensors may be provided to ensure the operator's hands are on both control handles and both feet are properly positioned on the floor before the vehicle can be moved or the platform raised; this ensures a four point stance, providing for operator stability and that the operator's hands and feet are within the operator's compartment anytime the vehicle is being moved or during lifting or lowering operations. Gate interlock switches may be provided to restrict or prevent travel of the vehicle under certain conditions. A load tray may be mounted to the telescoping mast to move vertically with the compartment. Rail guides may be mounted to the outside of the vehicle to facilitate entry into and operations within narrow aisles.

Other advantages of the invention will be apparent from the following description, the accompanying drawings and the appended claims.

### Brief Description of the Drawings

Fig. 1 is a perspective view of a personnel carrying vehicle of the present invention;
Fig. 2 is a perspective view of the vehicle of Fig. 1 with the operator's platform or compartment in the raised position;
Fig. 3 is a side elevational view of the vehicle of Fig. 1;
Fig. 4 is a plan view of the vehicle shown in Fig. 1;
Fig. 5 is a side elevational view of the vehicle with the platform raised, as shown in Fig. 2;
Fig. 6 is a perspective view of the vehicle of Fig. 1 with the load platform and rear deck partially cut away to reveal various components therebelow;
Fig. 7 is a plan view of a vehicle, which is equipped with a rail guide assembly to facilitate the vehicle's entering into a narrow aisle, with the vehicle approaching an aisle at an angle to the center line of the aisle;
Fig. 8 is a plan view similar to Fig. 7 but with the vehicle entering into the aisle;
Fig. 9 is a plan view similar to Fig. 7 with the vehicle in the aisle;
Fig. 10 is a plan view of the vehicle of the present invention entering an aisle with conventional guide rails;
Fig. 11 is a plan view of the vehicle of Fig. 1;
Fig. 12 is a plan view of a spring biased gate hinge mechanism showing a gate in the closed position;
Fig. 13 is a plan view of a gate hinge mechanism showing a gate in the open position;
Fig. 14 is a side elevational view of the gate mechanism;
Fig. 15 is a perspective view showing the service panel located at the front of the vehicle;
Fig.. 16 is an end elevational view, partly cut away to show the gate control mechanism;
Fig. 17A is a plan view of an automatic gate mechanism with the gate in the open position;
Fig. 17B is a plan view of an automatic gate mechanism with the gate in the closed position;
Fig. 18A is a side elevational view of the automatic gate mechanism with the platform in the lowermost position;
Fig. 18B is a side elevational view of the automatic gate mechanism with the platform in it raised position;
Fig. 19 is a detailed cross sectional plan view of the steering control handle with the handle in its neutral position;
Fig. 20 is a detailed cross sectional plan view of the steering control handle with the handle rotated to the left;
Fig. 21 is a cross sectional elevational view of the steering control handle;
Fig. 22 cross sectional view taken along lines 22-22 of Fig. 21;
Fig. 23 is a cross sectional view taken along lines 23-23 of Fig. 20;
Fig. 24 is a functional electrical block diagram showing the vehicle control circuit on the operator's platform; and
Fig. 25 is a functional electrical block diagram showing the vehicle control circuit on the vehicle or power unit.

### Description of the Preferred Embodiment

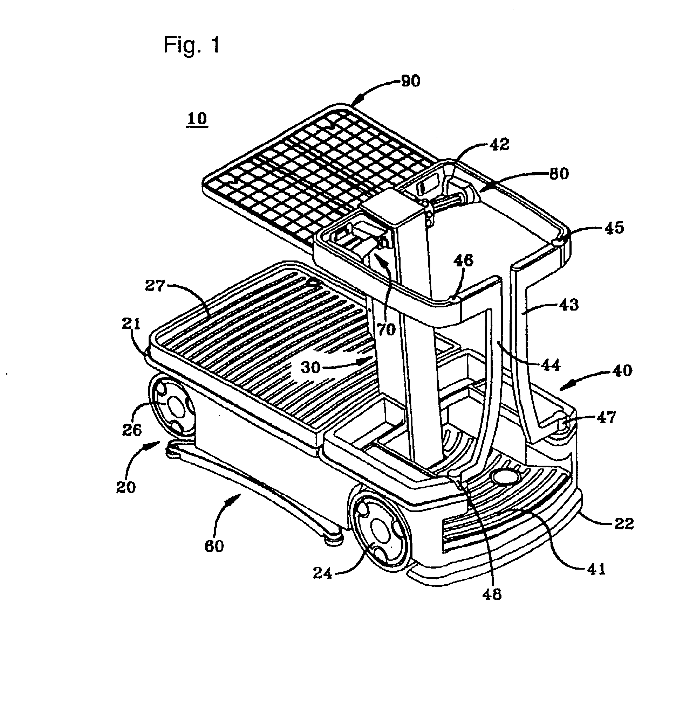

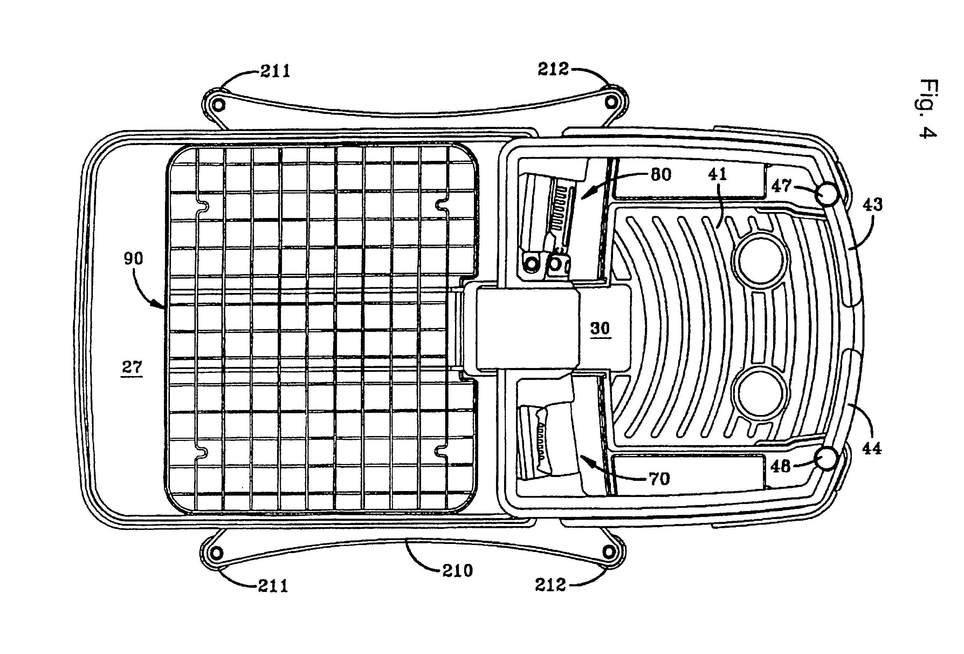

Referring now to Figs. 1-5, a personnel carrying vehicle 10 includes a self-propelled, steerable body 20 having a front 21 and a rear 22. A pair of drive wheels 24 are mounted near the rear of the body, and a pair of caster wheels 26 are mounted near the front of the body. A load deck or platform 27 is removably placed at the forward end of the vehicle.

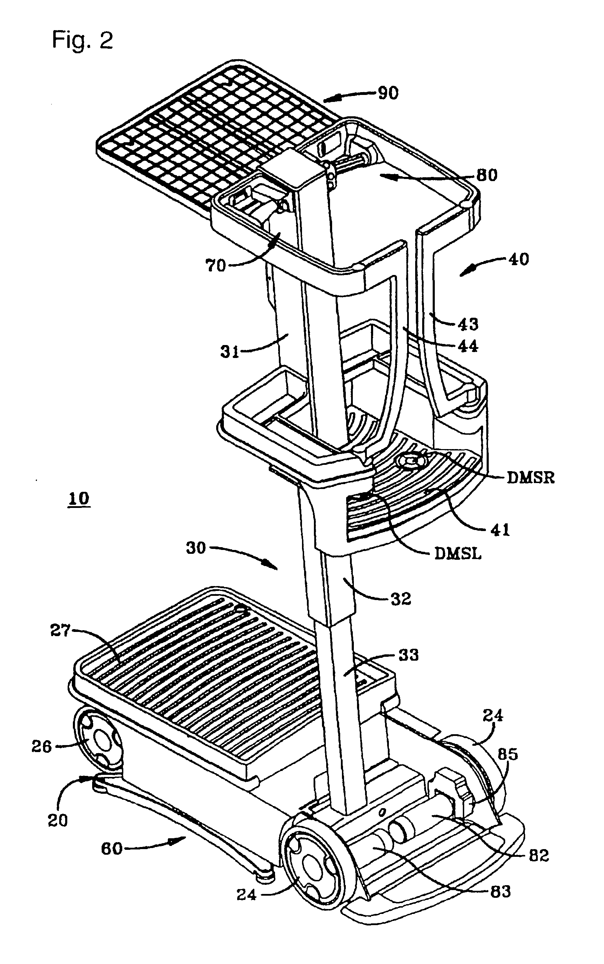

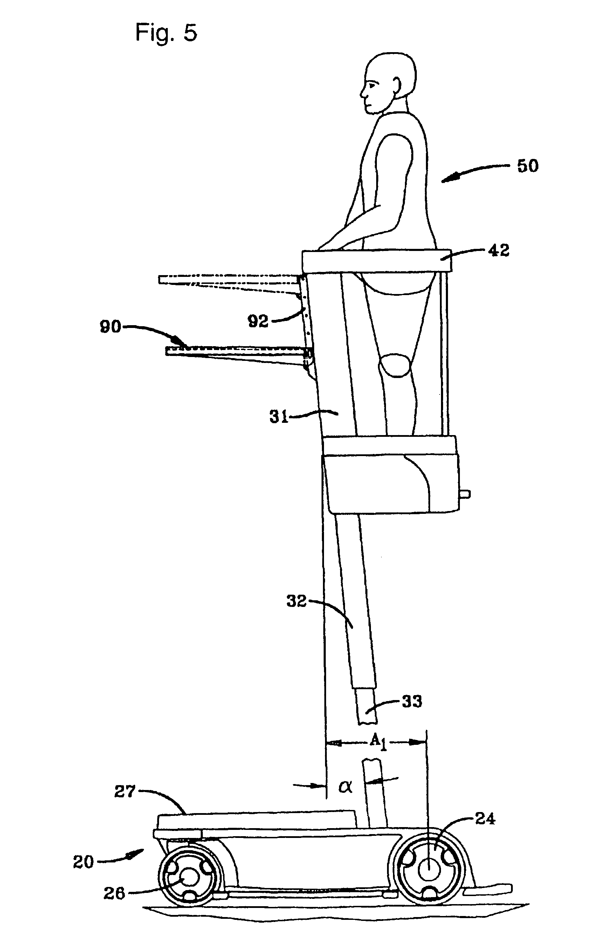

A mast 30 is attached to and extends upwardly from the body 20. As shown in Fig. 2, the mast 30 includes three nested sections 31, 32, and 33. A hydraulic cylinder is employed to extend the mast from its retracted position, shown in Fig. 1, to its fully extended position as shown in Figs. 2 and 5. While three mast sections are illustrated, the number of mast sections actually used can vary.

A personnel compartment 40 is attached to the mast 30, and specifically to the outer or upper section 31. The personnel compartment includes a floor 41 removably attached to the mast, a rail member 42 mounted to the mast and extending around the sides and front of the personnel compartment, and a pair of gate members 43 and 44 pivotally attached to the rail member 42 at 45 and 46, respectively, and to the floor at 47 and 48, respectively. The floor is hinged at the front of the compartment to permit access to the electric motors and other equipment beneath the floor without requiring the compartment 40 to be raised. The gate members are movable from a closed position, as shown in Fig. 1, to an open position wherein the gate members extend into the personnel compartment 40.

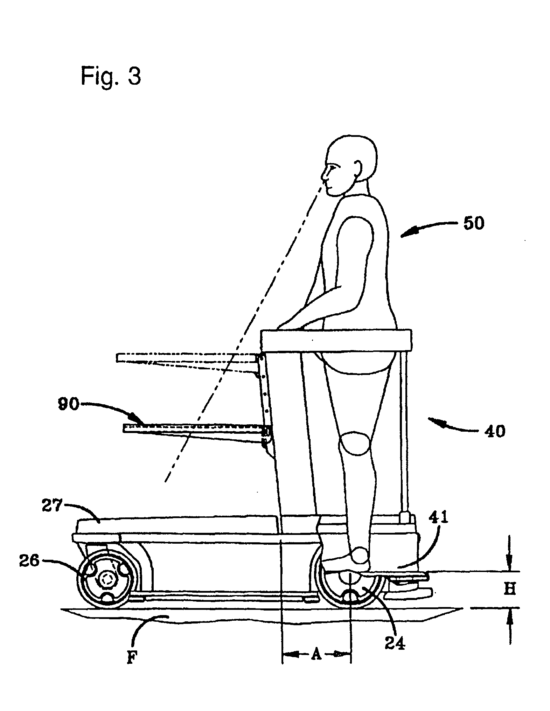

As shown in Figs. 1-3 and 5, the rail member 42, as well as the top of the mast 30, is placed approximately waist height of an operator 50 (Fig. 3) standing within the personnel compartment 40. The mast 30 does not extend substantially above the rail 42, thus giving the operator 50 unobstructed access to anything above the top edge of the rail.

As shown in Fig. 5, the lower mast member 33 is attached to the body 20 and extends upwardly and forward of the vehicle at an angle α of approximately 5° from the vertical. As the mast is extended, the personnel compartment is moved upwardly and forwardly.

The personnel or operator's compartment 40 benefits by the 5° tilt of the mast in that the upper portion of the compartment, near the waist of the operator, is larger than the floor, thus accommodating the operator comfortably without increasing the length of the vehicle.

Referring again to Fig. 1, a detachable rail guide assembly 60 is mounted on the body 20 between the front and rear wheels. A rail guide assembly is mounted on each side of the vehicle and is used to assist in guiding the vehicle into an aisle between closely spaced storage racks, as will be explained later.

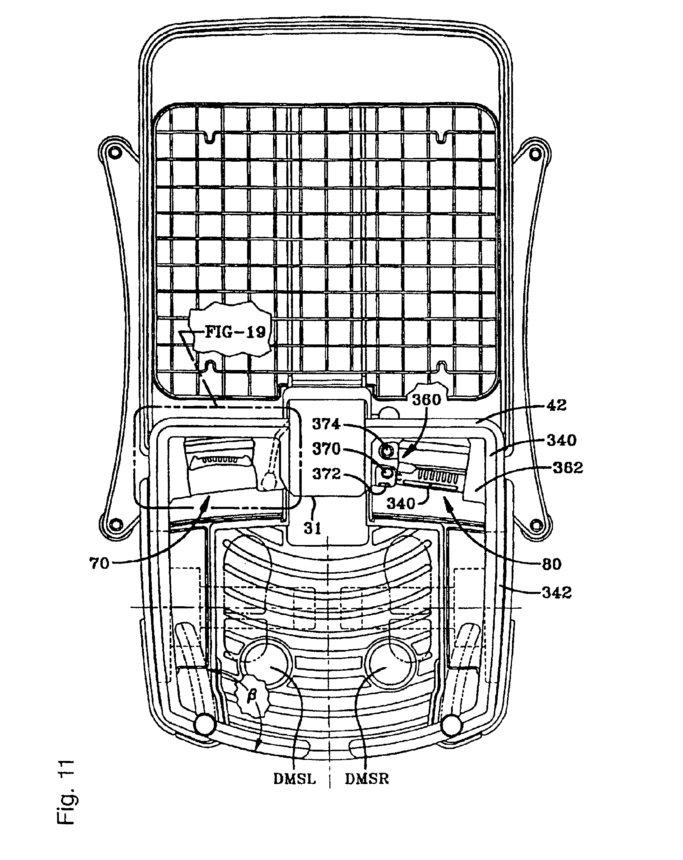

The operator 50 is provided with a pair of control handles, a steering control assembly 70 and a traction control assembly 80. When the vehicle is in operation, the operator must have one hand (the left hand as shown in Fig. 1) on the steering control, and the other hand (the right hand, as shown) on the traction control, and both feet on the floor of the operator's compartment, and specifically on dead man switches DMSL and DMSR, shown in Fig. 11. This ensures a four point stance, providing for operator stability and that the operator's hands and feet are within the operator's compartment anytime the vehicle is being moved or during lifting or lowering operations.

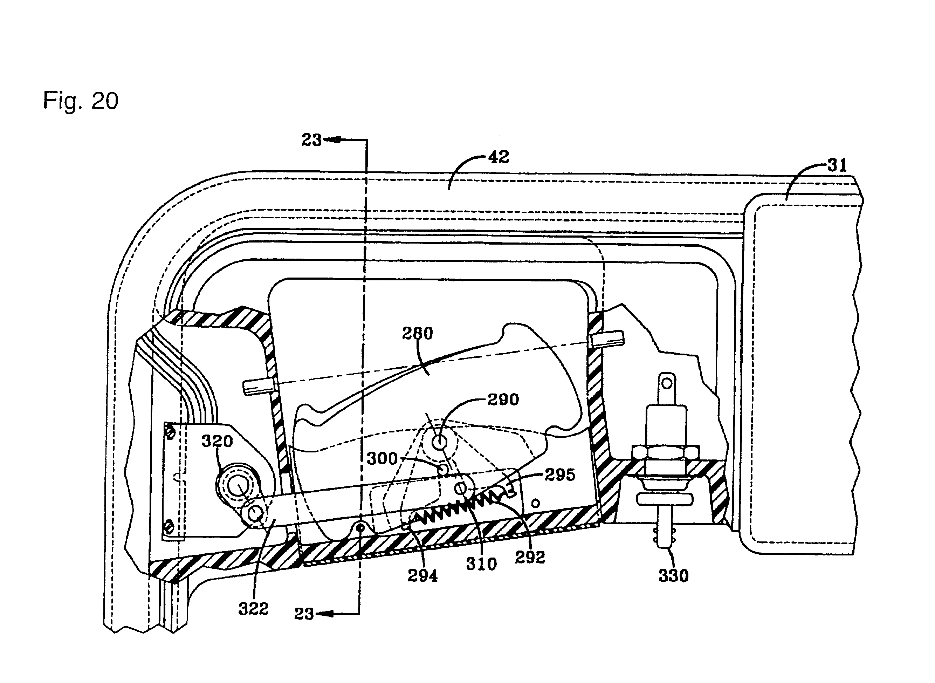

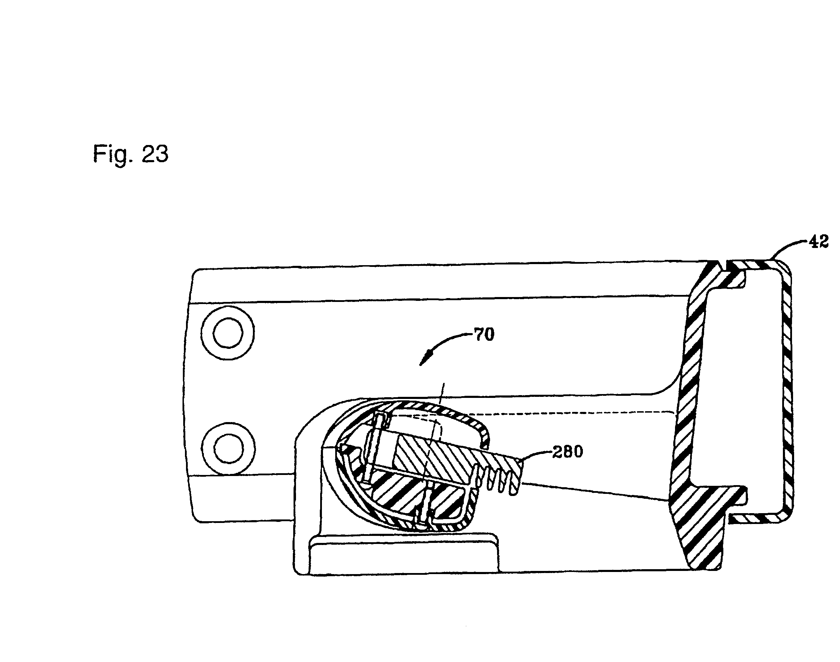

To insure the operator's hands are on the steering control, optical switches LHS and RHS are employed. In the preferred embodiment of this invention, the optical switches include infrared transmitters IRT mounted to project an light beam to the optical switches LHS, RHS that will be interrupted only when the hand is on the steering control. See Figs. 20 and 23. Circuit means are provided to prevent the optical switches from being taped over to simulate the presence of a hand; specifically, a timer circuit is provided to sense the opening of the floor switches, which would occur when an operator leaves the compartment, and thereafter inhibits operation of the vehicle if the optical switches do not observe the removal of a hand within a predetermined amount of time.

Referring to Fig. 2, a pair of traction motors 82 and 83 are mounted in a traction motor compartment located inside the body 20 and beneath the floor 41 of the operator's compartment. A cover plate, which normally encloses the traction motor compartment, has been removed to reveal the contents of the compartment. The traction motors are connected to the axle of wheels 24 through a gear box 85. As shown in Fig. 2, the center axis of each the traction motor is below the axis of the wheels, thus permitting the floor 41 of the compartment 40 to be positioned as close to the ground level as possible, at a height H, approximately 7 inches above the floor F.

Referring to Figs. 3-5, a load tray 90 may also be mounted on the mast 30. An attachment strip 92 extends downwardly from the top of the upper mast section 31 and is provided with spaced apart pin openings which permit easy attachment of the load tray 90 at different levels relative to the upper rail 42. The load tray may take various configurations.

The basic load tray 90 includes outside or peripheral members and a plurality of interior wires 92. Generally, the interior wires are designed to help support the load while at the same time, they are arranged to facilitate the operator's view of any material on the load platform 27.

The attachment of the load tray to the mast permits the load tray to pivot upwardly if it is inadvertently lowered onto an obstacle which has been placed on the load platform.

Referring to Figs. 5, the mast assembly 30 includes three mast sections 31, 32, and 33. Mast section 33 is welded to the body 20 and extends upwardly toward the front of the vehicle at a 5° angle. A hydraulic cylinder (not shown) located within mast assembly 30 may be extended to move the operator's compartment or platform to is maximum height of approximately 77 inches above the floor.

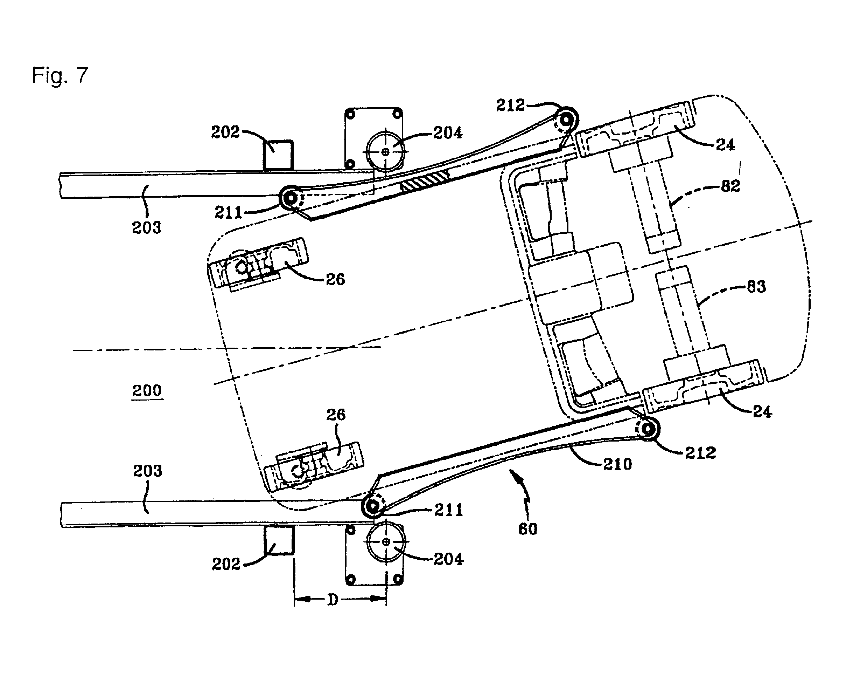

The vehicle shown in Figs. 1, and 6 - 9 is provided with a rail guide assembly 60 to assist the vehicle as it approaches and enters a narrow aisle 200. A rail guide assembly is attached to each side of the vehicle between the front and rear wheels. Each rail guide assembly 60, shown in Fig. 7, includes a curved rail 210 provided with a roller 211 at the forward end and a roller 212 at the rear thereof. In Fig. 7, which is a plan view showing a vehicle as it approaches an aisle 200, the aisle is defined by racks, vertical columns 202 of which are shown. At the floor level, L-shaped rails 203 are installed, the vertical component of which is high enough that it will engage rollers 211, 212 on the rail assembly. An entry roller 204 is positioned beyond the end of each aisle a sufficient distance D to prevent the end of the truck from striking the rack vertical columns 202 as the truck approaches the aisle entrance 200. A leading roller 211 will engage the aisle entry roller 204 or L-shaped rails 203 and roll along the rails 203. With the vehicle having a caster front wheels 26, the caster wheels will follow the alignment of the guidance rails 203.

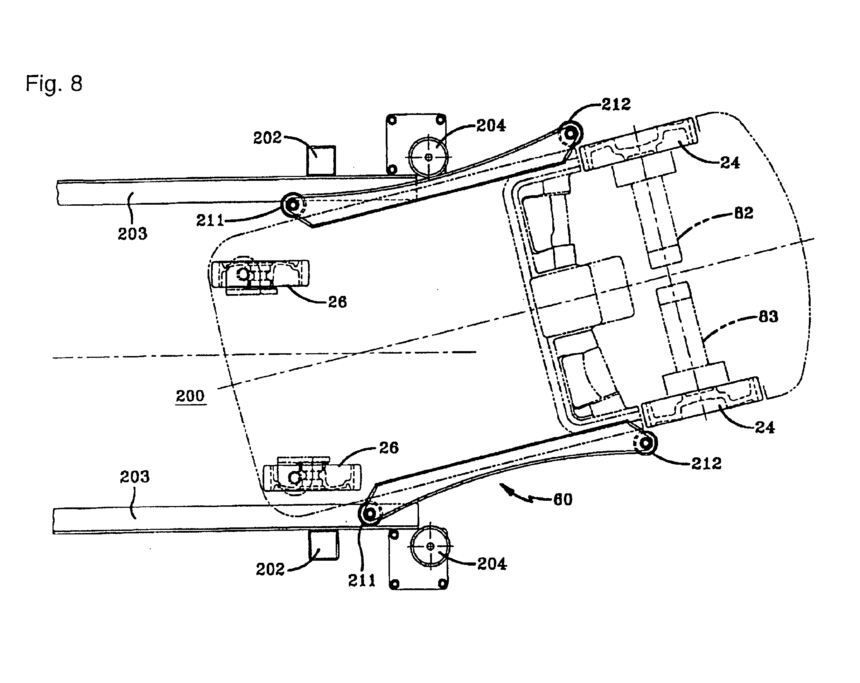

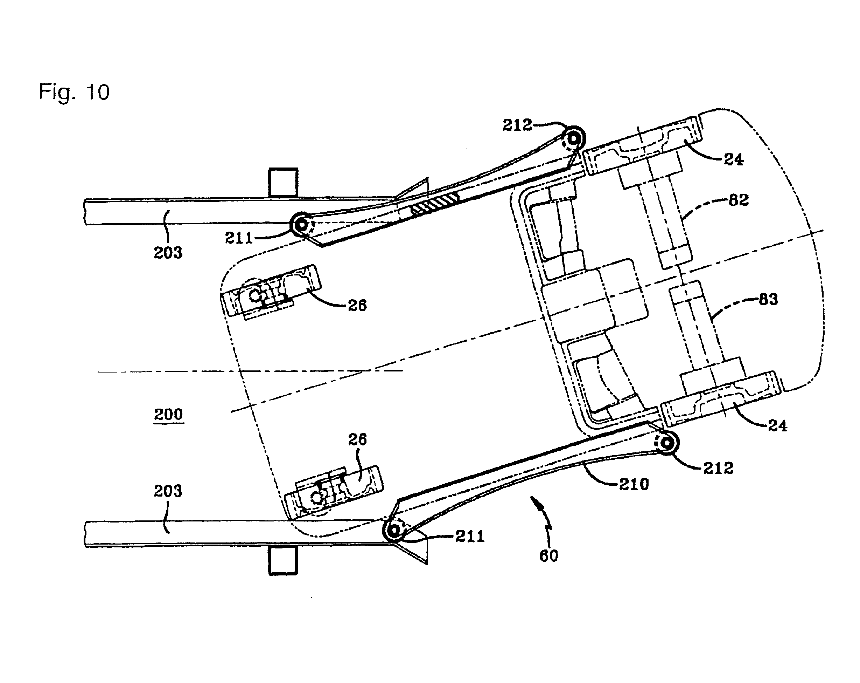

It is noted in Fig. 8, the rail 210 is curved or scalloped, and as the vehicle 10 which is not perfectly aligned to the aisle continues into aisle 200, the aisle entry roller 204 will contact the curved rail 210 and force the rear end of the truck to become aligned with aisle 200. The curved or scalloped shape of rail 210 allows deeper penetration and better alignment of the truck into the aisle before entry roller 204 forces the rear of the truck into final alignment. Instead of an entry roller, the end of the aisle may be provided with a more conventional tapered or beveled entry rails to facilitate alignment of the vehicle, as shown in Fig. 10. This, of course, is a sliding metal to metal contact which requires more force to align the rear of the truck than the rolling action of entry roller 204 requires.

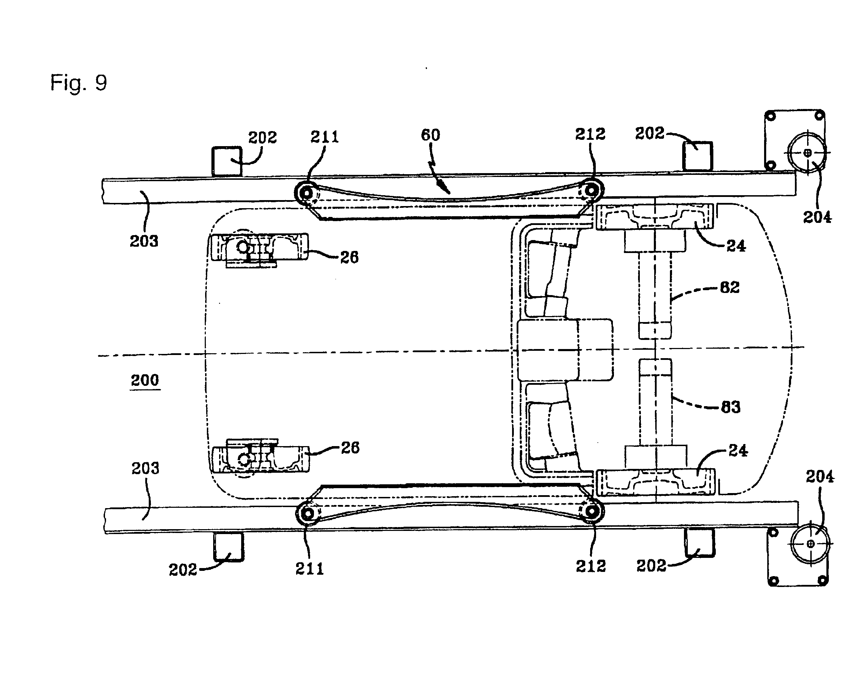

As shown in Fig. 9, the vehicle will eventually become aligned with both rollers 211, 212 engaging the vertical section of the rails 203 on one side or the other. Typically, there is only 1/2 inch total clearance between rollers 211, 212 and rails 203.

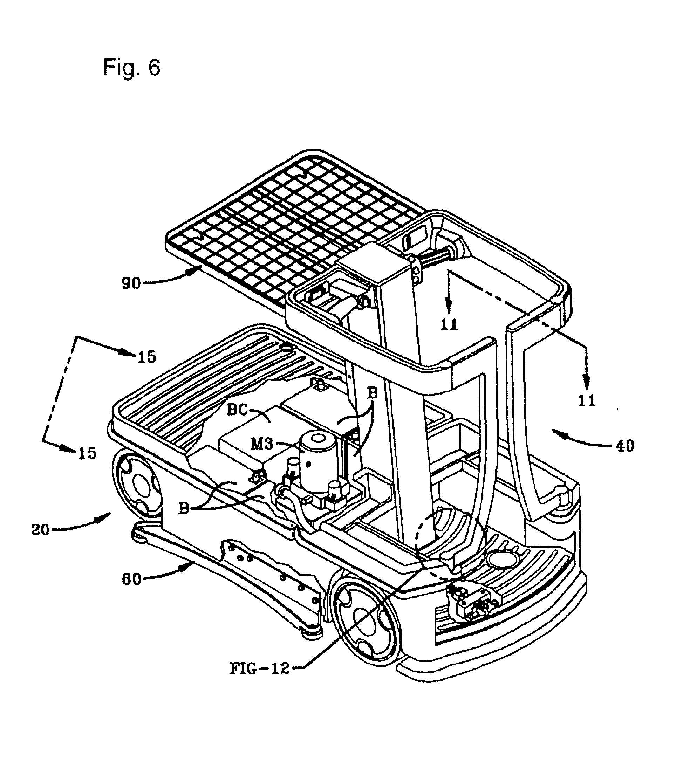

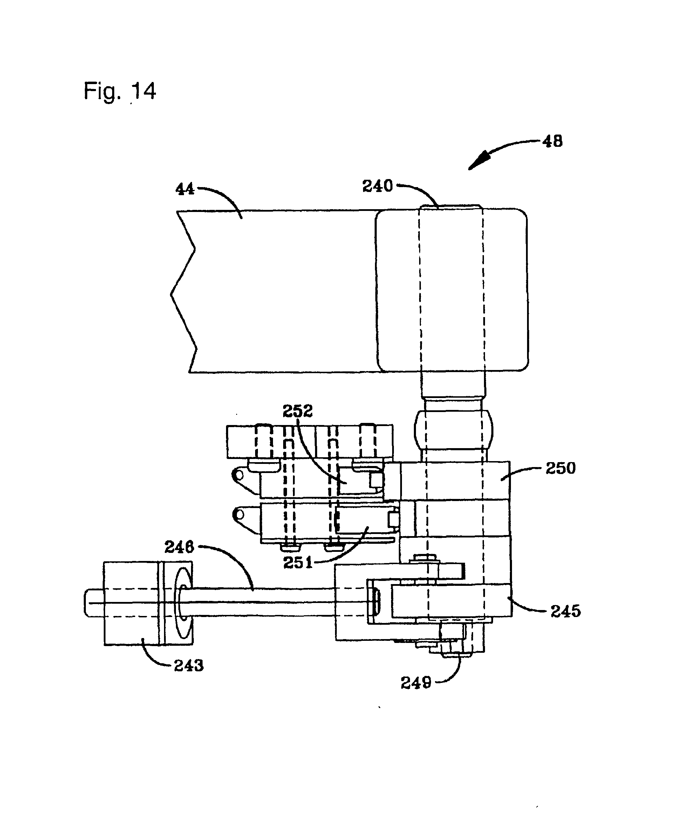

The gate mechanism will be described in connection with Figs. 6, 11-14. The gates 43, 44 are shown closed in Fig. 6, with the top sections 230 of the gates forming a continuation of the horizontal rail 42. The vertical components 232 of the gates extend vertically downwardly and then taper outwardly to hinge mechanism 47, 48 associated with the floor component 41 of the operator's compartment 40. In Fig. 11, which is a plan view of the operator's compartment, the gates are shown closed in solid line, and open in dotted line, moving from one stable position to the other position through angle β.

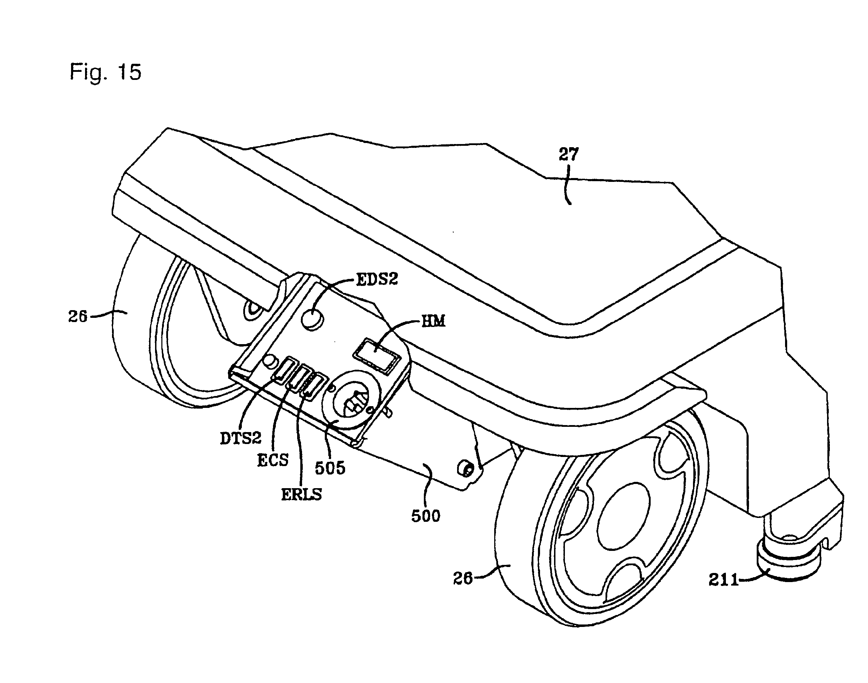

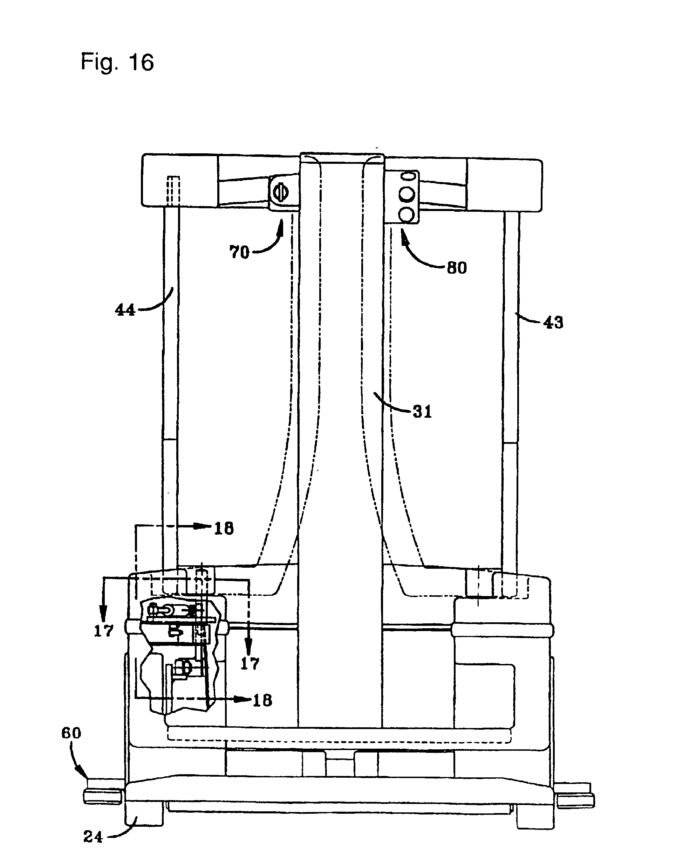

As may be seen from Figs. 3 and 15, with the gates closed, an operator standing within the operator's compartment 40 has free access 360° around the top of the rail 42, and associated gate components, and has free access to the front, sides and rear below the rail, except for the mast 30 at the forward part of the compartment, and the vertical gate sections 232 at the rear of the compartment.

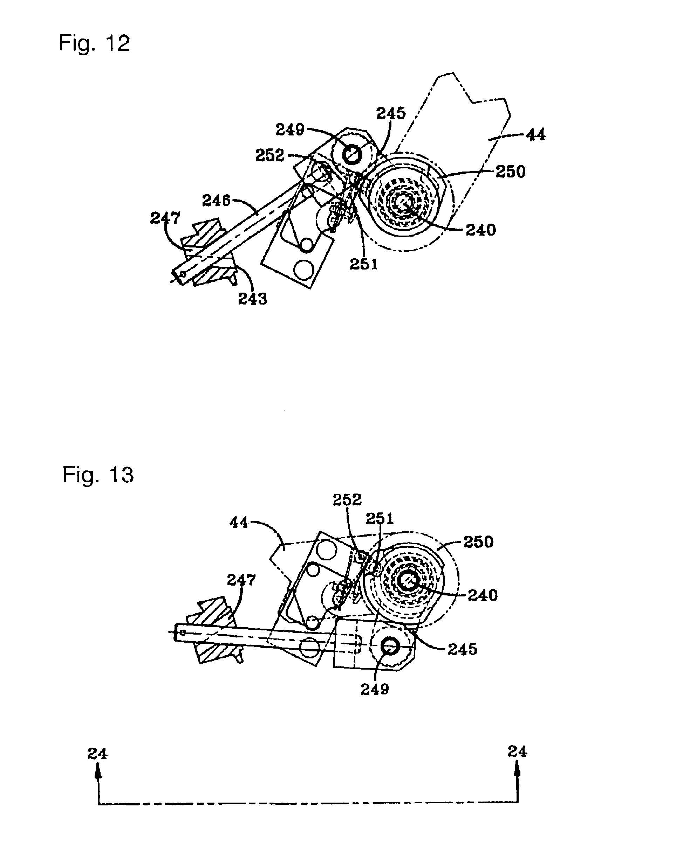

The gates are spring biased to an open or closed position by the mechanism shown in Figs. 12-14, which show in detail the hinge mechanism 48. This mechanism includes a vertical shaft 240 which is the bottom pivot member for the gate. The bottom portion of the shaft is supported in a bearing 242 mounted on bracket 243. A lever arm 245 is rigidly attached to the shaft 240 and by a pivot pin 249 to a rod 246 which is surrounded by a spring 247. The rod 246 extends through an opening 248 formed in a vertical extension of bracket 243. The gate may move from a closed position shown in Fig. 12 to an open position shown in Fig. 13. In both positions, the spring 247 biases the gate either open or closed. As described, the gates are independently operable.

A cam 250 is mounted on the shaft 240 and interacts with gate position indicating or interlock switches 251 and 252 to indicate the gate position. The interlock switches 251, 252 are provided on both the gates 43, 44 to restrict or prevent travel under certain conditions. If the platform is below approximately 20 inches, and the gates are open, full travel speed is permitted; if the gates are closed, reduced travel speed will be permitted. Above approximately 20 inches, with the gates open, the vehicle is prevented from traveling and the platform cannot be raised, but the platform can be lowered. Above 20 inches, with the gates closed, reduced travel speed is permitted.

An automatic gate mechanism is shown in Fig. 27-28. This mechanism includes a linkage operated by the moving of the platform to bias the gates open or closed. In each case, the gates may be either open or closed against a spring bias regardless of the position of the platform. Thus, the operator may hold open the gate while the platform is raised, or, the gate may be held closed when the platform is lowered. Normally, the platform height determines whether the gate will be open or closed.

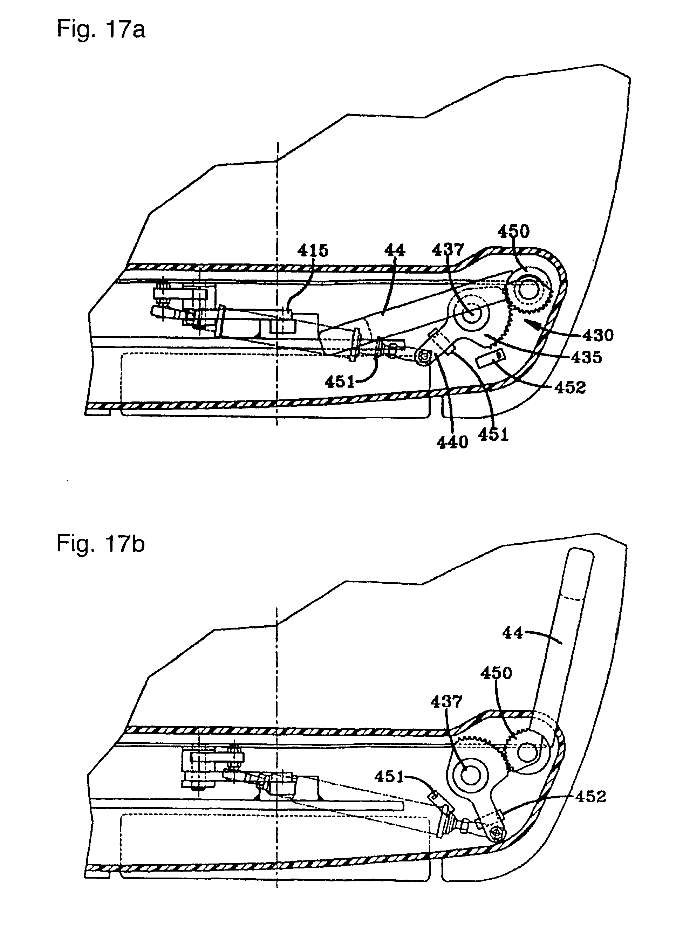

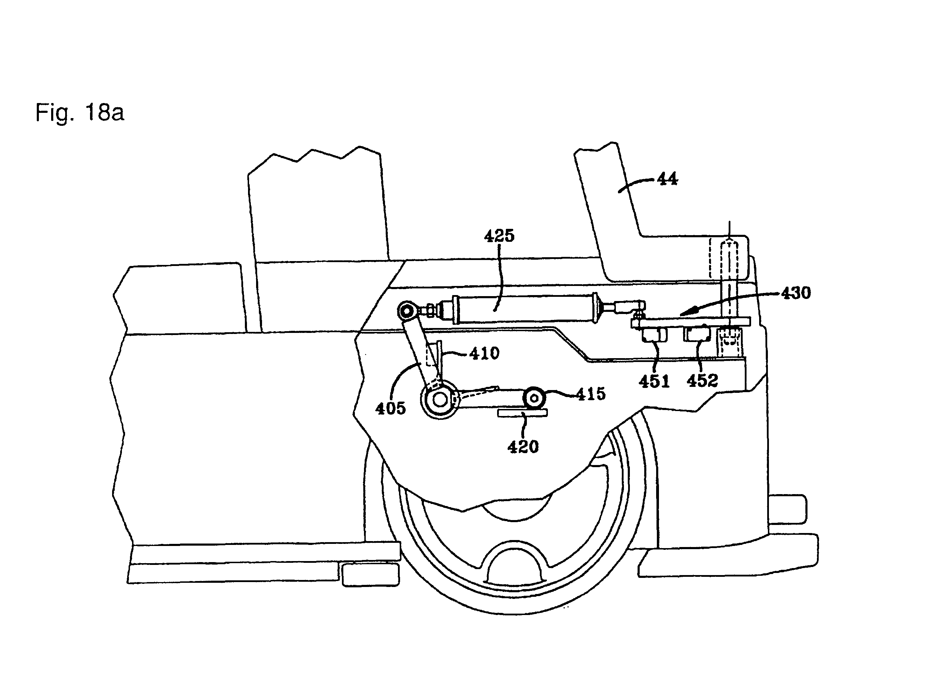

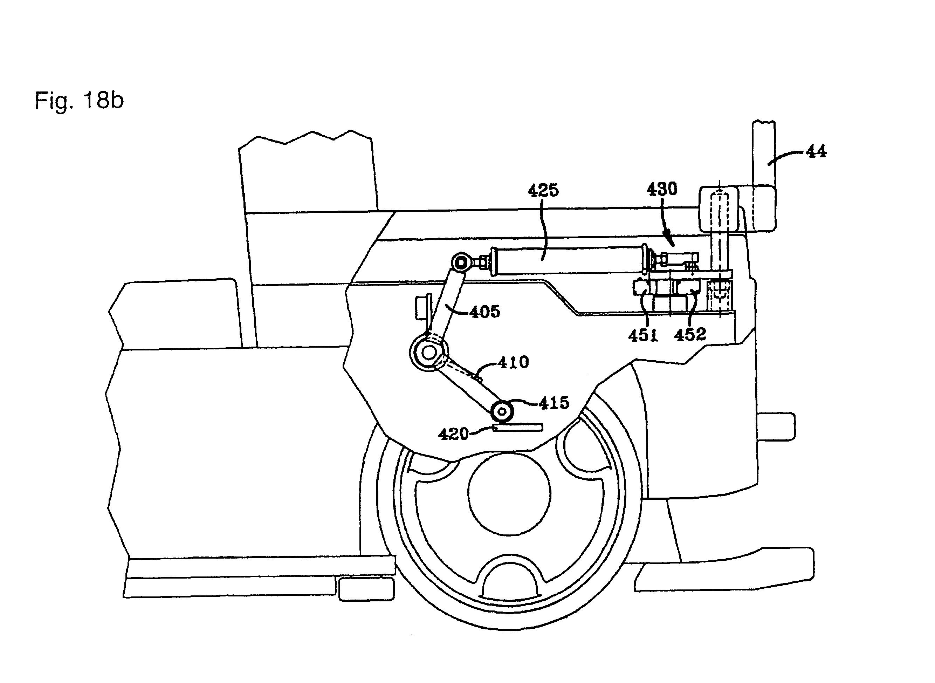

Fig. 17A is a plan view of the left rear corner of the operator's platform 40 showing the gate 44 in the open position; in this view, the platform is in its lowermost position, corresponding to Fig. 18A. Fig. 17B is a similar view, but with the gate 44 closed; the platform is in a raised position, corresponding to Fig. 18B. While the left gate 44 will be described, the right hand gate 43 will be operated in the same manner.

The automatic gate mechanism 400 includes a lever arm 405 pivotally mounted to the operator's platform 40 at 407. A torsion spring 410 urges the arm in the clockwise direction, as viewed in Figs. 18A and 18B. The lower end 412 of the arm is provided with a roller 415 which engages a plate 420 mounted on the body 20; the other end 422 of the arm 405 is connected to a spring assembly 425 which includes a spring 427 mounted within a cylindrical sleeve 430. The spring may be extended or stretched, but the sleeve prevents the spring from being compressed more than is shown in the drawings. The spring 427 is attached to a gate moving mechanism 430, which includes a member 435 rotatable about an axis 437; the member 435 is essentially a gear that is provided with an outwardly extending arm 440 which is attached to the spring 427. The gate 44 is also provided with a gear 450 which meshes with gear portion of member 435.

Referring to Figs. 17A and 18A, with the operator's platform down, the gate 44 will be in the open position as shown. This is accomplished by the roller 415 engages the plate 420, rotating the lever arm 405 to the position shown, causing the spring assembly 425 to pull on the arm 440 and thus open the gate. Should the operator desire to close the gate, the gate may be rotated clockwise causing the arm 405 to be rotated counterclockwise, and the spring 427 will be extended. The gate must be held closed.

In Figs. 17B and 18B, the operator's platform is in the raised position. Torsion spring 410 causes the lever arm 405 to rotate clockwise from the position shown in Fig. 18A, moving the spring assembly 425 to the right, and rotating the member 435 counterclockwise, closing the gate. As the platform continues to raise, the plate 420 will be separated from the lever arm 405; however, the lever arm 405 will not rotate further because the gate is now closed. The operator may open the gate by rotating it counterclockwise against the spring tension provided by torsion spring 410. The automatic gate mechanism is provided with gate position sensing switches 451 and 452 for indicating whether the gate is open or closed.

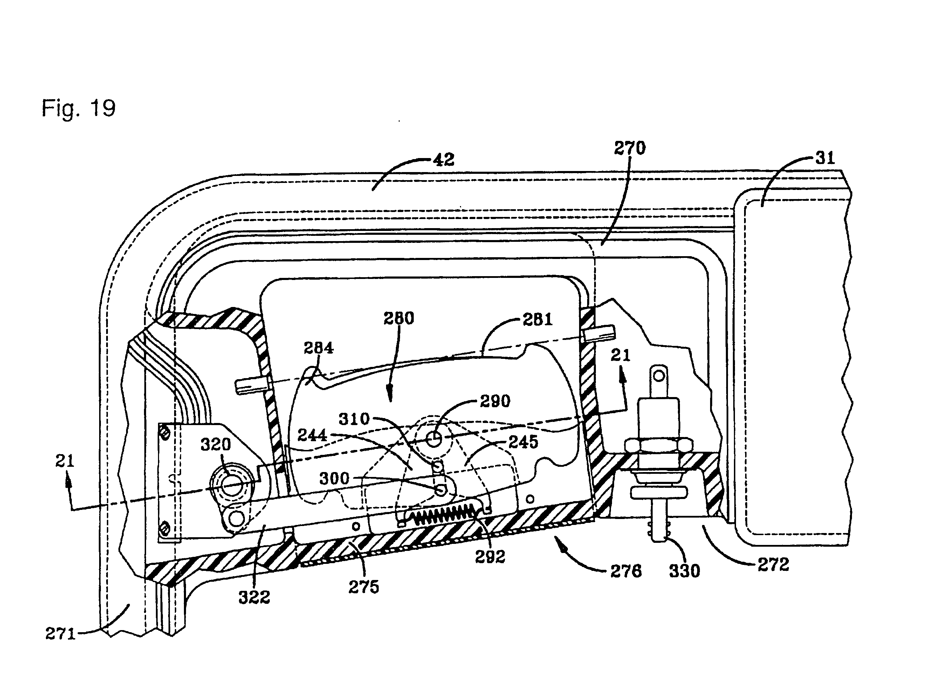

The steering control assembly 70 for the personnel carrying vehicle 10 is shown in Fig. 2. The steering control assembly includes a U-shaped member 270 which conforms to the shape of the rail member 42 and is attached to the rail member at 271 and to the mast section 31 at 272, as shown in Fig. 19. An interior bar 275 extends across the open end of the U-shaped member 270 at an angle γ of approximately 82° relative to the longitudinal axis of the vehicle and an angle of approximately 5° relative to the horizontal plane. A cover 276 is positioned over the central portion of the bar 275 to form a fixed grip or handle arranged generally horizontally for receiving the left hand of an operator with the operator's fingers extending over the top of the grip and the operator's thumb placed below the grip.

Mounted in and extending from the handle in the forward direction for engagement by the operator's fingers is a rocker mechanism 280. As shown, the rocker mechanism has a width approximately the width of the operator's fingers. As shown, the forward edge 281 of the rocker mechanism is curved at 282 and provided with outwardly extending protrusions 284 at the ends thereof. Notches are formed in the central area. This configuration conforms to the shape of a human hand.

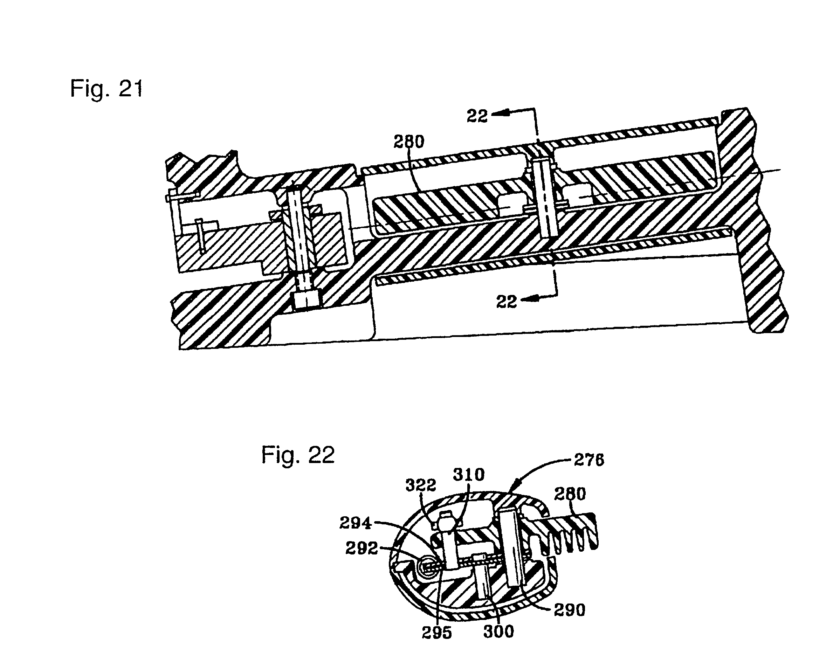

As shown in Fig. 19, the rocker mechanism 280 is mounted on a pivot 290 which extends upwardly from the bar 275 to permit rotation of the rocker about a generally horizontal plane by the operator's fingers from a neutral or home position to either a clockwise or first position, or a counterclockwise or second position, or any position in between. Biasing means in the form of a spring 292 urges the rocker mechanism to obtain a neutral position, as shown. The spring is attached to the ends of two arms 294, 295 which are free to pivot outwardly about the same pivot 290 as the rocker mechanism. A pin 300 extends upwardly from the bar 275 to prevent the arms from moving inwardly, across the center of the handle. A second pin 310 carried by the rocker mechanism 280 extends downwardly, as shown in Fig. 22 to engage the arms and to move one or the other of the arms outwardly, depending on the action of the operator's fingers.

A potentiometer 320 serves and a means responsive to the position of the rocker mechanism for providing an electrical control signal indicating direction of steering. The potentiometer is mounted to the left of the grip, as shown in Fig. 21, and is connected to the rocker mechanism by an actuator arm 322. A pin 310 carried by the rocker mechanism 280 allows attachment of the actuator arm 322 by a tapped hole on one end and a cam 328 attachment to the potentiometer shaft by a tapped hole on the other end.

The potentiometer is electrically connected to a steering control circuit which in turn controls the operation of the traction motors.

A key switch 330 is mounted to the U-shaped member 270. This switch is associated with the vehicle electrical control circuit.

The traction control assembly 80 for the personnel carrying vehicle 10 is shown in Fig. 2. The traction control assembly includes a U-shaped member 340 which conforms to the shape of the rail member 42 and is attached to the rail member at 342 and to the mast section 31 at 343, as shown in Fig. 11. A spring loaded, rotatable handle 350 is mounted between a switch assembly 360 at its left end and a supporting bracket 362 at its right end. A plurality of ridges are provide on the cover of the handle to assist the operator in grasping the handle.

The operation of the traction control handle is conventional as is described in greater detail in U.S. Patent 3,465,841.

The switch assembly 360 also includes push button switches 370, 372, which are used to control the raising and lowering of the operator's compartment 40, a horn button switch 373, an emergency stop button switch 374, and a rabbit/turtle switch 375.

The handle is biased to a center, neutral position but may be rotated in a forward direction to move the vehicle forward at a speed which is a function of the amount of rotation, or it may be rotated to the rear to cause the vehicle to move rearward, also at a speed proportional to the amount of rotation. In the neutral position, or anytime the speed request signal is less than the actual speed of travel, the vehicle control circuit will cause the vehicle slow using regeneration, that is, causing the traction motors to act as generators and return power to the batteries. Removal of either foot from the dead man switches will cause spring-applied, electrically-released brakes mounted on each traction motor to be applied after a short time delay. Thus, whenever the operator is out of the vehicle, or when either foot is removed from switches DMSL or DMSR, or after the vehicle has been stopped for a predetermined period of time, the brakes are applied.

Fig. 15 illustrates a service panel 500 mounted at the front of the vehicle. The service panel is designed to be normally closed, but may be opened to the position shown when desired. The service panel includes an electrical connector 505 to permit connection to commercial electrical mains for the purpose of charging the vehicle's internal storage batteries. On the service panel is an hour meter HM and several switches. Switch ERLS is an emergency raise/lower switch used to control the lifting of the operator's platform. Switch ECS is and elevation control switch toggle switch that must be placed in the proper position to permit use of the emergency raise/lower switch. Switch EDS2 is a emergency disconnect switch for removing power from the main contactor to prevent powered travel of the vehicle. Switch DTS1 is a drive-tow switch which releases the electric brakes to permit towing of the vehicle.

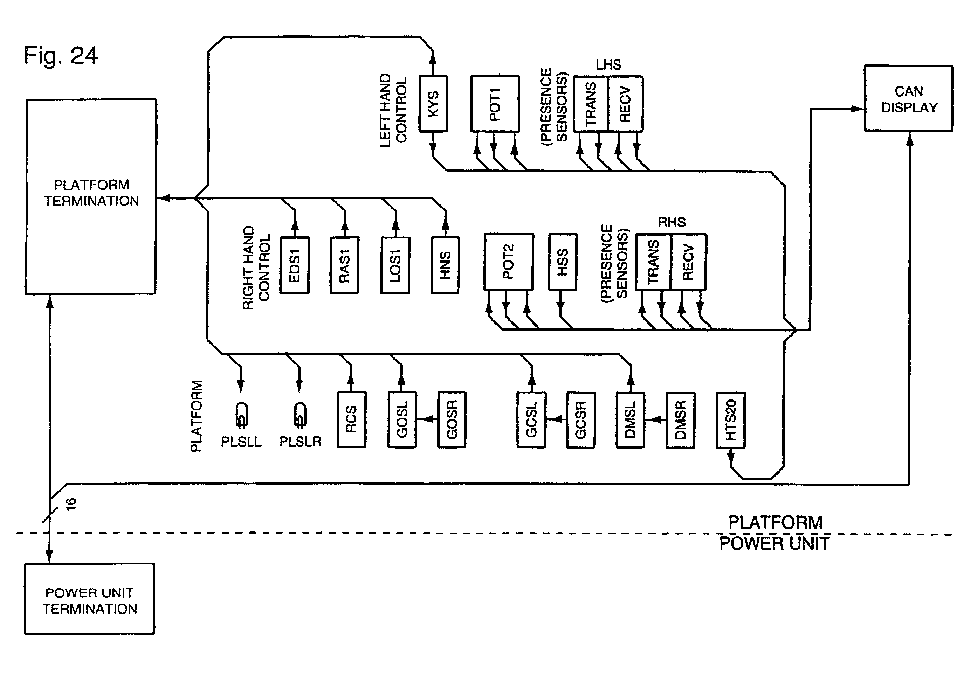

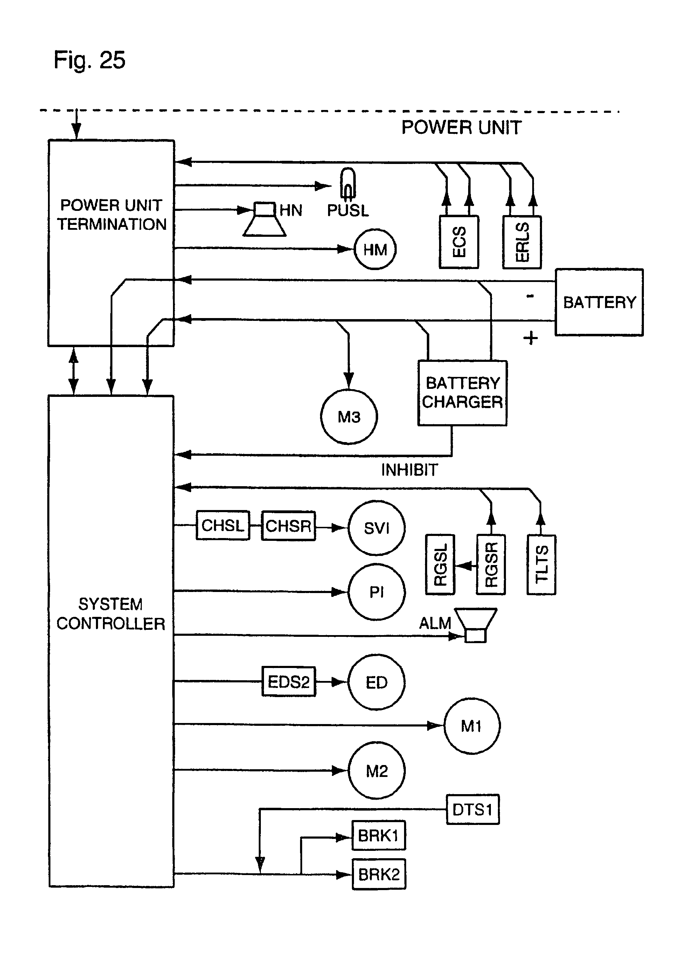

Referring to Figs. 24 and 25 which together comprise a functional electrical block diagram of the vehicle, there are two major components, namely the electrical components associated with the operator's compartment 40, also called the platform in Fig. 24, and those components associated with the power unit or body 20, shown in Fig. 35.

With regard to Fig. 24, electrical components are located in three primary areas: those associated with the steering control; those associated with the traction control; and those associated with the operator's compartment.

With regard to the left hand control components, KYS is a key switch used to authorize operation of the vehicle; LHS and RHS represents left and right hand sensors, optical sensors which determines the presence of the operator's hands; POT1 is the potentiometer 320 associated with the steering control assembly 70; DISP represents a display device located in an area near the steering control, an LED display device visible to the operator.

Turning now to the right hand control components, EDS1 is an emergency disconnect switch typically a red switch with a lightning bolt on it, switch 374 shown in Fig. 11; RAS1 is raise switch 370 and LOS1 is lower switch 372 (Fig. 11); HSS is a high speed switch 375 for controlling the performance level of the vehicle, sometimes known as a rabbit/turtle control; POT2 is a potentiometer in the traction control mechanism 340; HNS is the horn switch 373;

With regard to the operator's compartment or platform components, RCS is a raise cutout switch, also known as a height control switch which controls the upper limit the mast can be raised, a switch located on the mast; GOSL is gate open switch left and GOSR is gate open switch right, corresponding to switches 251, 252 (Fig. 12) or 451, 452 (Fig 28); GCSL is gate close switch left and GCSR is gate close switch right, these switches will control the speed of the vehicle and the ability to raise the platform, depending on whether the gate is open or closed and whether the platform is raised on not; HTS20 is a height sensing switch which is used in conjunction with the gate switches to control the speed curve; DMSL and DMSR are a floor mounted dead man switches, left and right. All of the platform components are terminated in terminal block PTB, which in turn is connected to a pair of cables that are connected to the power unit.

The power unit components are shown in Fig. 25 and include: ERLS, an emergency raise/lower switch; ECS, and elevation control switch toggle switch that must be used in conjunction with ERLS; CHSR and CHSL are chain slack switches, right and left, conventional switches which prevent the continued lowering of the operator's compartment in the event an obstacle is encountered; HN is the horn; SV1 is a solenoid valve which, when energize allows the operator's compartment or platform to lower by permitting hydraulic fluid to return to its reservoir; HM is an hour meter; M3 is a motor for driving the hydraulic lift pump; battery B is typically a set of four batteries providing a 24 volt output; a battery charger BC is also provided and may be connected to commercial mains through a connector 505 in the service panel; TLTS is a two axis tilt sensor to prevent raising of the platform in the event it becomes tilted beyond predetermined limits; RGSL and RGSR are rail guide switches, left and right which may be used to control the speed curve of the vehicle, depending on whether it is located between guide rails; P1 is the hydraulic pump contractor; ALM is a warning alarm; EDS2 is a second emergency disconnect switch; ED is an emergency disconnect contractor; M1 and M2 are the traction motors; DTS1 is a drive tow switch which removes most of the power to the vehicle but which releases the electric brakes; BRK1 and BRK1 are electric brakes on the traction motors. The components of the power unit are terminated either in the power unit termination block PUT or the system controller 600. The system controller 600 is a microprocessor for controlling braking, traction and steering. The platform terminal block PTB is connected to the power unit termination block PUT by means of a multi-conductor cable 610.

While the form of apparatus herein described constitutes a preferred embodiment of this invention, it is to be understood that the invention is not limited to this precise form of apparatus and that changes may be made therein without departing from the scope of the invention, which is defined in the appended claims.

## Claims

1. A personnel carrying vehicle (10) for transporting and elevating an operator, comprising:
a self propelled, steerable body (20) having a front (21) and a rear (22);
a mast (30) attached towards the rear of the body and extending upwardly and forwardly of the body from the place of attachment;
a personnel compartment (40) attached to the mast; **characterised by**
a load deck (27) mounted over the front (21) of the body (20) on the opposite side of the mast to the personnel compartment for supporting articles to be carried by the vehicle; and wherein
control handles (70, 80) are mounted within the personnel compartment for controlling steering and traction of the vehicle.

2. The personnel carrying vehicle (10) of Claim 1, further comprising:
wheels (24, 26) at the corners of the body (20);
a telescoping mast (30);
a personnel compartment (40) including a floor (41), and a rail (42) at approximately waist level, such that the personnel compartment is attached to the telescoping mast with the mast not higher than the rail; and
means for extending the mast and the personnel compartment upward from the base member; wherein
the mast extends upwardly at an angle of approximately 5°.

3. The personnel carrying vehicle (10) of Claim 2, wherein the mast (30) extends upwardly and outwardly of the floor (41) of the compartment (40), thus permitting the legs of an operator (50) to partially straddle the mast at the lower part of the compartment between the floor and the rail (42).

4. The personnel carrying vehicle (10) of any preceding claim, wherein the upper portion of the compartment (40) is larger than the floor (41) of the compartment.

5. The personnel carrying vehicle (10) of any preceding claim, which further comprises a load tray (90) mounted on and movable with the mast (30).

6. The personnel carrying vehicle (10) of Claim 5, wherein the load tray (90) is removably mounted to the mast (30).

7. The personnel carrying vehicle (10) of Claim 5 or Claim 6, wherein the load tray (90) is vertically movable along said mast (30).

8. The personnel carrying vehicle (10) of any of Claims 5 to 7, wherein said load tray (90) is vertically movable to one of a plurality of vertical locations along said mast (30).

9. The personnel carrying vehicle (10) of any of Claims 5 to 8, wherein the load tray (90) is pivotally mounted to said mast (30).

10. The personnel carrying vehicle (10) of any of Claims 2 to 9, wherein the compartment rail (42) extends around the front, sides and terminates at the rear of the compartment (40), and wherein the vehicle further comprises a pair of gate members (43, 44) to enclose the rear of the personnel compartment, the gate members being pivotally attached to the rail member (45, 46) and to a floor component (47, 48) of the compartment.

11. The personnel carrying vehicle (10) of any preceding claim, wherein a steering control assembly (70) is positioned for operation by the operator's left hand, and a traction control assembly (80) is positioned for operation by the operator's right hand.

12. The personnel carrying vehicle (10) of any preceding claim, wherein the control handles (70, 80) are positioned at approximately waist height and oriented generally horizontally, with one handle placed for grasping by the operator's right hand and the other handle placed for grasping by the operator's left hand, one of the handles being rotatable for controlling the speed of the vehicle in the forward and reverse direction, and the other of the handles being provided with means operated by the operator's fingers for controlling the steering of the vehicle.

13. The personnel carrying vehicle (10) of any preceding claim, further comprising sensors (LHS, RHS) to detect whether the operator's hands are both on the control handles (70, 80), and sensors (DMSL, DMSR) to detect whether the operator's feet are properly positioned on the floor (41) of the vehicle.

## Patentansprüche

1. Personentransportfahrzeug (10), um einen Bediener zu transportieren und zu heben, das Folgendes umfasst:
eine lenkbare Karosserie (20) mit Selbstantrieb, die eine Vorderseite (21) und eine Rückseite (22) aufweist;
einen Mast (30), der im hinteren Teil der Karosserie angebracht ist und vom Anbringungspunkt an der Karosserie nach oben und nach vorne verläuft;
eine am Mast befestigte Personenzelle (40); **gekennzeichnet durch**:
ein Ladefläche (27), die über der Vorderseite (21) der Karosserie (20) auf der gegenüberliegenden Mastseite von der Personenzelle montiert ist, um von dem Fahrzeug zu transportierende Artikel zu tragen; und wobei
Steuergriffe (70, 80) in der Personenzelle montiert sind, um Lenkung und Antrieb des Fahrzeugs zu steuern.

2. Personentransportfahrzeug (10) nach Anspruch 1, das ferner Folgendes umfasst:
Räder (24, 26) an den Ecken der Karosserie (20);
einen Teleskopmast (30);
eine Personenzelle (40) mit einem Boden (41) sowie einer Schiene (42) etwa in Hüfthöhe, so dass die Personenzelle am Teleskopmast angebracht ist, wobei der Mast nicht höher ist als die Schiene; und
Mittel zum Ausfahren des Masts und der Personenzelle von dem Basiselement nach oben; wobei
der Mast in einem Winkel von etwa 5° nach oben verläuft.

3. Personentransportfahrzeug (10) nach Anspruch 2, wobei der Mast (30) vom Boden (41) der Zelle (40) nach oben und nach außen verläuft, so dass die Beine eines Bedieners (50) teilweise am Mast am unteren Teil der Zelle zwischen dem Boden und der Schiene (42) grätschen.

4. Personentransportfahrzeug (10) nach einem der vorherigen Ansprüche, wobei der obere Teil der Zelle (40) größer ist als der Boden (41) der Zelle.

5. Personentransportfahrzeug (10) nach einem der vorherigen Ansprüche, das ferner eine Lastenaufnahme (90) aufweist, die an dem Mast (30) montiert und damit beweglich ist.

6. Personentransportfahrzeug (10) nach Anspruch 5, wobei die Lastenaufnahme (90) entfernbar am Mast (30) montiert ist.

7. Personentransportfahrzeug (10) nach Anspruch 5 oder Anspruch 6, wobei die Lastenaufnahme (90) vertikal entlang dem genannten Mast (30) beweglich ist.

8. Personentransportfahrzeug (10) nach einem der Ansprüche 5 bis 7, wobei die genannte Lastenaufnahme (90) vertikal zu einer von mehreren senkrechten Stellen entlang dem genannten Mast (30) beweglich ist.

9. Personentransportfahrzeug (10) nach einem der Ansprüche 5 bis 8, wobei die Lastenaufnahme (90) schwenkbar an dem genannten Mast (30) montiert ist.

10. Personentransportfahrzeug (10) nach einem der Ansprüche 2 bis 9, wobei die Zellenschiene (42) um die Vorderseite und die Seiten herum verläuft und im hinteren Teil der Zelle (40) endet, und wobei das Fahrzeug ferner ein Paar Torelemente (43, 44) umfasst, um den hinteren Teil der Personenzelle zu umschließen, wobei die Torelemente schwenkbar an dem Schienenelement (45, 46) und an einer Bodenkomponente (47, 48) der Zelle angebracht sind.

11. Personentransportfahrzeug (10) nach einem der vorherigen Ansprüche, wobei eine Lenkanlage (70) zur Bedienung mit der linken Hand des Bedieners positioniert ist und eine Antriebssteuerung (80) zum Bedienen mit der rechten Hand des Bedieners positioniert ist.

12. Personentransportfahrzeug (10) nach einem der vorherigen Ansprüche, wobei die Steuergriffe (70, 80) etwa in Hüfthöhe positioniert und allgemein horizontal ausgerichtet sind, wobei ein Griff zum Ergreifen mit der rechten Hand des Bedieners und der andere Griff zum Ergreifen mit der linken Hand des Bedieners platziert sind, wobei einer der Griffe zum Regeln der Geschwindigkeit des Fahrzeugs in der Vor- und Rückwärtsrichtung drehbar ist und der andere der Griffe mit Mitteln versehen ist, die mit den Fingern des Bedieners bedient werden können, um die Lenkung des Fahrzeugs zu steuern.

13. Personentransportfahrzeug (10) nach einem der vorherigen Ansprüche, das ferner Sensoren (LHS, RHS) umfasst, um zu erkennen, wenn sich beide Hände des Bedieners an den Steuergriffen (70, 80) befinden, und Sensoren (DMSL, DMSR), um zu erkennen, wenn die Füße des Bedieners richtig auf dem Boden (41) des Fahrzeugs stehen.

## Revendications

1. Véhicule de transport de personnel (10) pour transporter et mettre en élévation un opérateur, comprenant :
un corps automoteur dirigeable (20) avec un côté avant (21) et un côté arrière (22) ;
un mât (30) fixé vers l'arrière du corps et se prolongeant vers le haut et vers l'avant du corps à partir de l'emplacement de fixation ;
un compartiment pour personnel (40) fixé au mât ; **caractérisé par**
une plate-forme de charge (27) montée, au-dessus de l'avant (21) du corps (20) sur le côté opposé du mât, sur le compartiment pour personnel afin de soutenir des articles destinés à être portés par le véhicule ; et cas dans lequel
des manettes de commande (70, 80) sont montées à l'intérieur du compartiment pour personnel afin de piloter la direction et la traction du véhicule.

2. Véhicule de transport de personnel (10) selon la revendication 1, comprenant en outre :
des roues (24, 26) au niveau des angles du corps (20) ;
un mât télescopique (30) ;
un compartiment pour personnel (40) avec un plancher (41), et un rail (42) se trouvant au niveau de la taille environ, de sorte que le compartiment pour personnel soit fixé au mât télescopique alors que le mât n'est pas à une hauteur plus importante que le rail ; et
des moyens pour prolonger le mât et le compartiment pour personnel vers le haut à partir de l'élément base ; cas dans lequel
le mât se prolonge vers le haut suivant un angle d'environ 5°.

3. Véhicule de transport de personnel (10) selon la revendication 2, le mât (30) se prolongeant vers le haut et l'extérieur du plancher (41) du compartiment (40), ce qui permet aux jambes de l'opérateur (50) de chevaucher partiellement le mât au niveau de la partie inférieure du compartiment entre le plancher et le rail (42).

4. Véhicule de transport de personnel (10) selon l'une quelconque des revendications précédentes, la portion supérieure du compartiment (40) étant plus grande que le plancher (41) du compartiment.

5. Véhicule de transport de personnel (10) selon l'une quelconque des revendications précédentes, qui comprend en outre un plateau de charge (90) lequel est monté sur le mât (30) et peut être déplacé avec ce dernier.

6. Véhicule de transport de personnel (10) selon la revendication 5, le plateau de charge (90) étant monté de façon amovible sur le mât (30).

7. Véhicule de transport de personnel (10) selon la revendication 5 ou la revendication 6, le plateau de charge (90) pouvant être déplacé dans le plan vertical le long dudit mât (30).

8. Véhicule de transport de personnel (10) selon l'une quelconque des revendications 5 à 7, ledit plateau de charge (90) pouvant être déplacé dans le plan vertical vers une position d'une pluralité de positions verticales le long dudit mât (30).

9. Véhicule de transport de personnel (10) selon l'une quelconque des revendications 5 à 8, le plateau de charge (90) étant monté de façon pivotante sur ledit mât (30).

10. Véhicule de transport de personnel (10) selon l'une quelconque des revendications 2 à 9, le rail du compartiment (42) se prolongeant autour de l'avant, des côtés et se terminant au niveau de l'arrière du compartiment (40), et le véhicule comprenant en outre une paire d'éléments portillon (43, 44) afin de fermer l'arrière du compartiment pour personnel, les éléments portillon étant fixés de façon pivotante à l'élément rail (45, 46) et à un composant plancher (47, 48) du compartiment.

11. Véhicule de transport de personnel (10) selon l'une quelconque des revendications précédentes, un ensemble commande de direction (70) étant positionné pour en permettre l'actionnement par la main gauche de l'opérateur, et un ensemble commande de traction (80) étant positionné pour en permettre l'actionnement par la main droite de l'opérateur.

12. Véhicule de transport de personnel (10) selon l'une quelconque des revendications précédentes, les manettes de commande (70, 80) étant positionnées à hauteur de taille environ et orientées de manière générale dans le plan horizontal, alors qu'une manette est placée de façon à permettre à la main droite de l'opérateur de l'agripper, et que l'autre manette est placée de façon à permettre à la main gauche de l'opérateur de l'agripper, l'une des manettes pouvant être tournée afin de piloter la vitesse du véhicule dans le sens avant et le sens arrière, et l'autre manette étant munie de moyens actionnés par les doigts de l'opérateur afin de piloter la direction du véhicule.

13. Véhicule de transport de personnel (10) selon l'une quelconque des revendications précédentes, comprenant en outre des capteurs (LHS ou capteur gauche, RHS ou capteur droit) pour déterminer si les mains de l'opérateur sont toutes deux placées sur les manettes de commande (70, 80), et des capteurs (DMSL, interrupteur d'homme mort côté gauche, DMSR ou interrupteur d'homme mort côté droit) pour déterminer si les pieds de l'opérateur sont correctement positionnées sur le plancher (41) du véhicule.
